# EUROPEAN PATENT APPLICATION

(11) **EP 4 640 477 A1**
(43) Date of publication of application: **29.10.2025**
(21) Application number: 24172420.2
(22) Date of filing: 25.04.2024
(51) Int. Cl.: B60L 53/14, B60L 53/16, B60L 53/18, B60L 53/30, B60L 53/31, B60L 53/66, B60L 53/67, H02J 7/00

(54) **CHARGING SYSTEM**

(71) Applicant: ABB E-mobility B.V., 2629 JG Delft (NL)
(72) Inventor: GRESS, Julian, 97857 Urspringen (DE)
(74) Representative: Zimmermann & Partner Patentanwälte mbB

(57) **Abstract**

The invention relates to a charging system (1) for an electric vehicle (100), wherein the charging system (1) comprises a supply unit (10) and one or a plurality of underfloor distribution units (40) electrically connected with the supply unit (10), wherein each of the underfloor distribution units (40) comprises a DC charging equipment (42) comprising a charging cable (52) and an underfloor cabinet (30), wherein the underfloor cabinet (30) comprises a housing (34) surrounding an interior space (32), wherein the DC charging equipment (42) is at least partially arranged beneath a driving surface (3) for the electric vehicle (100) in the interior space (32) of the underfloor cabinet (30), wherein the housing (34) of the underfloor cabinet (30) comprises a top opening (38) and a top cover (36) configured to cover, in a closed position of the top cover (36), the top opening (38), and to open, in an open position of the top cover (36), access to the interior space (32) of the underfloor cabinet (30) through the top opening (38) for retrieving the charging cable (52) from the interior space (32) of the underfloor cabinet (30).

## Description

### Technical Field

The invention relates to a charging system for electrical vehicles.

### Background

The number of electrical vehicles increases, including the number of large electrical vehicles. Companies operate entire fleets of electric vehicles, e.g. trucks of a logistic fleet and/or a delivery fleet. Further, public transport can comprise fleets of large electric vehicles, particularly busses. Charging systems are needed in which these vehicles can be charged quickly and reliably.

Existing charging systems can be all-in-one charging stations (particularly stations in which power electronics as well as the charging interface are combined in one system) or split systems (particularly systems in which the power electronics are built in in a separate cabinet and in which the dispenser with the charging interface can be installed apart from the power cabinet with the power electronics). Both alternatives require lots of space. Electric trucks, e.g., can be charged while they are being loaded or unloaded at the loading dock. However, many logistics companies have a massive space problem at parking spaces or at the loading dock such that they cannot install all-in-one charging stations between two loading/parking bays. Split systems can, e.g., provide charging cables from the top of a supporting structure (or the ceiling of a depot). However, the construction of those split systems also requires lots of space, for instance for the pillars of such a supporting structure. Additionally, the all-in-one charging station is installed on the ground and are, thus, arranged in the driving area. With split systems, the cable hanging from upside down into the driving area of the truck driver. All-in-one charging station and/or supporting structures can be knocked over in the event of carelessness. This results in considerable damages, downtimes and/or costs. Further, the work safety is reduced, e.g. due to the fact that charging infrastructure could block escape routes or make them at least smaller. Moreover, the above-ground installations require additional space.

Hence, there is a need for a reliable and safe charging system.

### Disclosure of the invention

The problem is solved by the charging system according to claim 1 and the method according to claim 15. Further embodiments of these aspects of the present invention are stated in the corresponding sub claims and/or are described below.

A first aspect of the invention relates to a charging system for an electric vehicle, wherein the charging system comprises a supply unit and a plurality of underfloor distribution units electrically connected with the supply unit. The supply unit can comprise an AC-DC converter system configured to convert alternating current (AC) from an electric grid to direct current (DC). In an embodiment, each of the underfloor distribution units comprises a DC charging equipment and an underfloor cabinet, wherein the underfloor cabinet comprises a housing surrounding an interior space. In an embodiment, the DC charging equipment is at least partially arranged beneath a driving surface for the electric vehicle in the interior space of the underfloor cabinet. The DC charging equipment can be electrically connected to the supply unit for receiving the direct current provided by the supply unit. In an embodiment, the DC charging equipment comprises a charging cable with a charging connector configured for connection with a charging inlet of the electric vehicle for charging the electric vehicle with the direct current, wherein the charging connector is electrically connected to the supply unit via the charging cable. The housing of the underfloor cabinet can comprise a top opening and a top cover. The top cover can be configured to cover, in a closed position of the top cover, the top opening. The top cover can be configured to open, in an open position of the top cover, access to the interior space of the underfloor cabinet through the top opening for retrieving the charging cable from the interior space of the underfloor cabinet.

An aspect of the invention relates to a charging system for an electric vehicle, wherein the charging system comprises a supply unit and one underfloor distribution unit electrically connected with the supply unit. The supply unit can comprise an AC-DC converter system configured to convert alternating current (AC) from an electric grid to direct current (DC). In an embodiment, the underfloor distribution unit comprises a DC charging equipment and an underfloor cabinet, wherein the underfloor cabinet comprises a housing surrounding an interior space. In an embodiment, the DC charging equipment is at least partially arranged beneath a driving surface for the electric vehicle in the interior space of the underfloor cabinet. The DC charging equipment can be electrically connected to the supply unit for receiving the direct current provided by the supply unit. In an embodiment, the DC charging equipment comprises a charging cable with a charging connector configured for connection with a charging inlet of the electric vehicle for charging the electric vehicle with the direct current, wherein the charging connector is electrically connected to the supply unit via the charging cable. The housing of the underfloor cabinet can comprise a top opening and a top cover. The top cover can be configured to cover, in a closed position of the top cover, the top opening. The top cover can be configured to open, in an open position of the top cover, access to the interior space of the underfloor cabinet through the top opening for retrieving the charging cable from the interior space of the underfloor cabinet.

In an embodiment, the charging system is configured such that it is at least partially invisibly stowable after the charging session is completed (e.g. between two charging sessions). In an embodiment, the charging system is configured such that the DC charging equipment is at least partially invisibly storable after the charging session is completed (e.g. between two charging sessions). In an embodiment, the charging system is configured such that the DC charging equipment is at least partially invisibly storable when the DC charging equipment is not in use.

In an embodiment, the supply unit is a power cabinet. In an embodiment, the supply unit is part of a split system. In an embodiment, the supply unit is an above ground supply unit.

In an embodiment, the underfloor distribution unit comprises one underfloor distribution unit. In an embodiment, the plurality of underfloor distribution units comprises two underfloor distribution units. In an embodiment, the plurality of underfloor distribution units comprises three underfloor distribution units. In an embodiment, the plurality of underfloor distribution units comprises four underfloor distribution units. In an embodiment, the plurality of underfloor distribution units comprises at least five underfloor distribution units. In an embodiment, the plurality of underfloor distribution units comprises at least eight underfloor distribution units. The underfloor distribution unit can be a charging point.

The AC-DC converter system can be configured to convert AC to DC. AC-DC converter system can be configured to transform the alternating current to direct current. Each underfloor distribution unit can be configured to receive direct current. Each underfloor distribution unit can be configured to provide the received direct current to an electrical vehicle connected to the charging connector.

An advantage can be that direct current for immediate charging can be provided. Advantageously, no conversion and/or transformation from AC to DC has to take place in the underfloor distribution unit. Advantageously, no conversion and/or transformation from AC to DC has to take place in the electrical vehicle. Advantageously, the charging system can be configured for fast-charging.

In an embodiment, the system can be configured such that the underfloor distribution unit or the underfloor distribution units can provide a maximum charging current of at least 200 A. In an embodiment, the system can be configured such that the underfloor distribution unit or the underfloor distribution units can provide a maximum charging current of at least 250 A. In an embodiment, the system can be configured such that the underfloor distribution unit or the underfloor distribution units can provide a maximum charging current of at least 400 A. In an embodiment, the system can be configured such that the underfloor distribution unit or the underfloor distribution units can provide a maximum charging current of at least 600 A.

In an embodiment, the system can be configured such that the underfloor distribution unit or the underfloor distribution units can provide a voltage of at least 150 V. In an embodiment, the system can be configured such that the underfloor distribution unit or the underfloor distribution units can provide a voltage of at least 200 V. In an embodiment, the system can be configured such that the underfloor distribution unit or the underfloor distribution units can provide a voltage of at least 300 V. In an embodiment, the system can be configured such that the underfloor distribution unit or the underfloor distribution units can provide a voltage of at least 400 V. In an embodiment, the system can be configured such that the underfloor distribution unit or the underfloor distribution units can provide a voltage of at least 500 V. In an embodiment, the system can be configured such that the underfloor distribution unit or the underfloor distribution units can provide a voltage of at least 600 V. In an embodiment, the system can be configured such that the underfloor distribution unit or the underfloor distribution units can provide a voltage of at least 800 V. In an embodiment, the system can be configured such that the underfloor distribution unit or the underfloor distribution units can provide a voltage of at least 1000 V.

In an embodiment, the system can be configured such that the underfloor distribution unit or the underfloor distribution units can provide a voltage between 150 V and 940 V.

In an embodiment, the system can be configured such that the underfloor distribution unit or the underfloor distribution units can provide a charging power of at least 100 kW. In an embodiment, the system can be configured such that the underfloor distribution unit or the underfloor distribution units can provide a charging power of at least 150 kW. In an embodiment, the system can be configured such that the underfloor distribution unit or the underfloor distribution units can provide a charging power of at least 200 kW. In an embodiment, the system can be configured such that the underfloor distribution unit or the underfloor distribution units can provide a charging power of at least 250 kW. In an embodiment, the system can be configured such that the underfloor distribution unit or the underfloor distribution units can provide a charging power of at least 300 kW. In an embodiment, the system can be configured such that the underfloor distribution unit or the underfloor distribution units can provide a charging power of at least 350 kW. In an embodiment, the system can be configured such that the underfloor distribution unit or the underfloor distribution units can provide a charging power of at least 400 kW. In an embodiment, the system can be configured such that the underfloor distribution unit or the underfloor distribution units can provide a charging power of at least 450 kW. In an embodiment, the system can be configured such that the underfloor distribution unit or the underfloor distribution units can provide a charging power of at least 500 kW. In an embodiment, the system can be configured such that the underfloor distribution unit or the underfloor distribution units can provide a charging power of at least 550 kW. In an embodiment, the system can be configured such that the underfloor distribution unit or the underfloor distribution units can provide a charging power of at least 600 kW.

In an embodiment, the system can be configured such that the underfloor distribution unit or the underfloor distribution units can provide a charging power of 564 kW, particularly at a voltage of 940 V and a charging current of 600 A.

The underfloor cabinet can be an underground container. The underfloor cabinet can at least partially be arranged or be arrangeable in the underground. The underfloor cabinet can at least partially be arranged below the driving surface of the electrical vehicle.

The underfloor cabinet can comprise a housing surrounding an interior space. The housing can comprise a top opening. The top opening can be arranged and configured such that the interior space is accessible via the top opening. The housing can comprise a bottom. The housing can comprise a circumferential wall. The housing can comprise a top cover. The top cover can comprise an outer surface. The top cover can comprise an inner surface. The outer surface and the inner surface can be arranged facing away from each other. The top cover can be a lid. The circumferential wall can be arranged between the bottom and the top cover. The circumferential wall can comprise a circumferential lower edge. The circumferential lower edge can abut the bottom. The circumferential wall can comprise a circumferential upper edge. The circumferential upper edge and the circumferential lower edge can face away from each other. The circumferential upper edge can define the top opening.

The top cover can be arranged or can be arrangeable in an open position. The top cover can be arranged or can be arrangeable in a closed position. The top cover can be arranged and configured to cover the top opening (closed position). The top cover can be arranged and configured to uncover the top opening (open position).

In the closed position, the top cover can be a portion of the driving surface. In the closed position, the top cover can form a portion of the driving surface. In an embodiment, in the closed position, the outer surface of the top cover can be a portion of the driving surface. In an embodiment, in the closed position, the outer surface of the top cover can form a portion of the driving surface. In the closed position, the top cover and the bottom can face each other.

In an embodiment, the underfloor cabinet can comprise a polycarbonate manhole, particularly a polycarbonate manhole with base plate and strain relief. The underfloor cabinet, particularly the housing, can comprise predetermined braking points for cable entry. In an embodiment, the circumferential wall can comprise predetermined braking points for cable entry. An advantage can be that polycarbonate is durable, uv-resistant and compatible with groundwater.

In an embodiment, the top cover comprises stainless steel. In an embodiment, the top cover consists of stainless steel. The stainless steel can be V2A steel.

In an embodiment, the top cover comprises a submersion hood. The submersion hood can be configured for protection from ingress of moisture. The submersion hood can comprise or consist of stainless steel (particularly V2A steel). In an embodiment, the submersion hood can comprise or consist of plastic (particularly polypropylene).

In an embodiment, the underfloor cabinet can be configured according to DIN EN 60529. The underfloor cabinet can be configured such that in the closed position, the underfloor cabinet is configured according to protection class IP 58. The underfloor cabinet can be configured such that in the closed position, the underfloor cabinet is configured according to protection class IP 48. The underfloor cabinet can be configured such that in the open position, the underfloor cabinet is configured according to protection class IP 54.

In an embodiment, the underfloor cabinet can have a height between 550 mm and 1300 mm. The height can be 625 mm. In an embodiment, the height can be 845 mm. In an embodiment, the height can be 970 mm. In an embodiment, the height can be 1065 mm. In particular, the height can be the distance between to bottom and the top cover (in the closed position).

In an embodiment, the underfloor cabinet can have a length between 800 mm and 1600 mm. In an embodiment, the length can be 1326 mm. In an embodiment, the length can be 1050 mm. In an embodiment, the underfloor cabinet can have a width between 600 mm and 1000 mm. In an embodiment, the width can be 825 mm. In an embodiment, the width can be 841 mm.

In an embodiment, the height is 625 mm, the length is 1050 mm and the width is 825 mm. In an embodiment, the height is 845 mm, the length is 1050 mm and the width is 825 mm. In an embodiment, the height is 1065 mm, the length is 1050 mm and the width is 825 mm. In an embodiment, the height is 970 mm, the length is 1326 mm and the width is 841 mm.

In an embodiment, the underfloor cabinet can be configured such that in the open position the top cover extends upwards at a maximum between 850 mm and 1300 mm. In an embodiment, the underfloor cabinet can be configured such that in the open position the top cover extends upwards at a maximum of 960 mm.

In an embodiment, the underfloor cabinet is an underfloor cabinet of type EK800 (Langmatz). In an embodiment, the underfloor cabinet is an underfloor cabinet of type EK890 (Langmatz).

In an embodiment, the DC charging equipment is arranged in the interior space of the underfloor cabinet. The underfloor cabinet can be configured to house the DC charging equipment. In particular, the length, height and/or width of the underfloor cabinet can be selected to house the DC charging equipment. In an embodiment, the DC charging equipment is arranged and configured such that it is retrievable form the interior space of the underfloor cabinet, particularly temporarily retrievable form the interior space of the underfloor cabinet. In an embodiment, the DC charging equipment is arranged and configured such that it is repeatedly, reversibly retrievable form the interior space of the underfloor cabinet. In particular, the DC charging equipment, particularly the charging connector, can be retrieved from the interior space for the charging process. In particular, the DC charging equipment can be returned into the interior space after the charging process.

In an embodiment, the DC charging equipment is arrangeable in a storing position. In particular, the DC charging equipment can be arrangeable in a storing position in the interior space of the underfloor cabinet. In an embodiment, the DC charging equipment is arrangeable in an operating position. In particular, the DC charging equipment can be arrangeable in an operating position, wherein in the operating position the DC charging equipment is located at least partially outside the interior space of the underfloor cabinet. In an embodiment, the charging connector is arranged outside the interior space of the underfloor cabinet, when the DC charging equipment is arranged in the operating position.

The DC charging equipment can be repeatedly, reversibly movable from the storing position to the operating position. The DC charging equipment can be repeatedly, reversibly movable from the operating position to the storing position.

An advantage can be that the charging cable and the charging connector can (at least for the most part) be routed underground to the electrical vehicle that should be charged. An advantage can be that the DC charging equipment is arranged or arrangeable in the underground. Advantageously, no above ground charging station and/or supporting structures are needed, particularly no above ground charging station and/or supporting structures are needed close to the charging location at which the vehicle is charged. An advantageous can be that the driving area is not affected (particularly no above-ground obstacles). The number of accidents can be reduced and the work safety can advantageously be increased. Downtimes and/or costs can advantageously be reduced. Further, advantageously, no additional space on the ground has to be foreseen for (is occupied by) the above-ground charging infrastructure (e.g. all-in-one charging stations).

In an embodiment, the charging system is configured for fast charging. In an embodiment, the charging system is configured for high-power DC fast charging. The charging system can be a combined charging system (CCS). The charging connector can be a CCS plug (combined charging system plug).

In an embodiment, the charging system is a megawatt charging system (MCS). The charging connector can be a MCS plug (megawatt charging system plug).

In an embodiment, the charging system is a charging system for a large electrical vehicle such as a bus or a truck. In an embodiment, the charging system is configured such that a plurality of large electrical vehicles can be charged via the charging system. In an embodiment, the charging system is configured such that a plurality of large electrical vehicles can be charged at the same time via the charging system.

In an embodiment, the supply unit can be arranged distant to the underfloor cabinets. In an embodiment, the supply unit can be arranged distant to the DC charging equipment. The supply unit can be arranged distant to the plurality of underfloor distribution units. The distance between the supply unit and the underfloor distribution units can be greater than 20 m, particularly greater than 50 m, particularly greater than 75 m, particularly greater than 100 m, particularly greater than 125 m, particularly greater than 150 m. In an embodiment, the distance between the supply unit and the nearest underfloor distribution unit can be greater than 20 m, particularly greater than 50 m, particularly greater than 75 m, particularly greater than 100 m, particularly greater than 125 m, particularly greater than 150 m. In an embodiment, the distance between the supply unit and the underfloor distribution units can be between 20 m and 200 m, particularly between 50 m and 175 m, particularly between 75 m and 150 m.

The supply unit can be arranged distant to the driving area. The connection between the supply unit and the underfloor distribution unit can be underground. The supply unit can be connected to the plurality of underfloor distribution units, particularly to the plurality of DC charging equipment, via underground cabling. In an embodiment, the DC charging equipment is electrically connected with the supply unit via a DC cable installed under ground. In an embodiment, the DC charging equipment is electrically connected with the supply unit via a DC cable installed over ground.

Hence, advantageously, the charging system can be arranged and configured such that there is no unit of the charging system in the driving area of the electrical vehicle, particularly neither during the charging process nor in case a charging connector is not in use. The risk of an accident and/or a damage can advantageously be reduced.

In an embodiment the charging system comprises the supply unit and the plurality of underfloor distribution units electrically connected with the supply unit, wherein each of the underfloor distribution units comprises a DC charging equipment comprising a charging cable and an underfloor cabinet, wherein the underfloor cabinet comprises a housing surrounding an interior space, wherein the DC charging equipment is at least partially arranged beneath a driving surface for the electric vehicle in the interior space of the underfloor cabinet, wherein the housing of the underfloor cabinet comprises a top opening and a top cover configured to cover, in a closed position of the top cover, the top opening, and to open, in an open position of the top cover, access to the interior space of the underfloor cabinet through the top opening for retrieving the charging cable from the interior space of the underfloor cabinet.

In an embodiment, the top cover comprises an outer surface forming at least a portion of the driving surface for the electric vehicle, when the top cover is in the closed position.

In an embodiment, the interior space of the underfloor cabinet is accessible from an exterior, particularly such that the charging connector is retrievable from the underfloor cabinet from the exterior, when the top cover is in the open position. In an embodiment, the interior space of the underfloor cabinet is accessible from above, particularly from above the driving surface, particularly such that the charging connector is retrievable from the underfloor cabinet, when the top cover is in the open position.

In an embodiment, the top cover is repeatedly, reversibly movable from the closed position to the open position.

In an embodiment, in the closed position, the top cover flushes with the surrounding surface. In an embodiment, in the closed position the inner surface of the top cover faces towards the interior space of the housing. In an embodiment, in the closed position the inner surface of the top cover faces towards the bottom of the housing. In the closed position, the top cover can form a flush upper closure (levelling upper closure; flat upper closure). In an embodiment, in the closed position, the underfloor cabinet does not constitute an obstacle in the driving area. In an embodiment, in the closed position, nothing protrudes upwards from the underfloor cabinet.

In the closed position, the top cover can form at least a portion of the driving surface for the electric vehicle. In particular, the underfloor cabinet can be configured such that the top cover (particularly the outer surface of the top cover) can be driven over by an electrical vehicle.

In advantage can be that the driving area is not affected by the underfloor cabinet. The number of accidents can be reduced and the work safety can advantageously be increased. Downtimes and/or costs can advantageously be reduced. Advantageously, space can be saved.

In the open position of the top cover, the top opening can be uncovered. The interior space of the housing can be accessible via the top opening, when the top cover is in the open position. The open position can be an access position. The DC charging equipment can be accessible, when the top cover is in the open position.

In the open position of the top cover, the DC charging equipment can be accessible from above the driving surface. In the open position of the top cover, the DC charging equipment can be accessible through the top opening from above the driving surface. Advantageously, an easy access to the DC charging equipment can be provided, when the top cover is in the open position.

In an embodiment, in the open position, the top cover is arranged such that an access to the DC charging equipment is provided, particularly such that the DC charging equipment is receivable from the underfloor cabinet, particularly for a charging process, and/or particularly such that the DC charging equipment is returnable to the underfloor cabinet, particularly after a charging process. In an embodiment, the access to the DC charging equipment is provided through the top opening.

In an embodiment, advantageously, the DC charging equipment can be easily accessible, when the top cover is in the open position, wherein in the closed position, the safety is increased.

In an embodiment, the top cover is repeatedly, reversibly movable from the closed position to the open position. In an embodiment, the top cover is repeatedly, reversibly movable from the open position to the closed position.

The top cover can be transferable from the closed position to the open position and/or from the open position to the closed position. In an embodiment, the top cover can be repeatedly, reversibly transferable from the closed position to the open position. In an embodiment, the top cover can be repeatedly, reversibly transferable from the open position to the closed position.

In an embodiment, the top cover can be hingeable between the open position and the closed position and/or vice versa. In an embodiment, the top cover can be foldable between the open position and the closed position and/or vice versa. In an embodiment, the top cover can be liftable and/or dropable between the open position and the closed position and/or vice versa. In an embodiment, the top cover can be slidable between the open position and the closed position and/or vice versa.

In an embodiment, the top cover is a single piece cover. In an embodiment, the top cover comprises at least two portions. In an embodiment, the two portions of the top cover can be moved relative to each other between the open position and the closed position and/or vice versa.

An advantage can be that the underfloor cabinet can easily be opened and/or closed. Advantageously, an easy access, particularly an easy retrieval and/or return of the DC charging equipment from the underfloor cabinet can be provided.

In an embodiment, the top cover comprises an inner surface, wherein the DC charging equipment is mounted at the inner surface of the top cover. The inner surface can be arranged opposite the outer surface of the top cover.

In an embodiment, the DC charging equipment is mounted such at the inner surface of the top cover that in the closed position of the top cover, the DC charging equipment protrudes into an interior space of the underfloor cabinet. In an embodiment, the DC charging equipment is mounted such at the inner surface of the top cover that in the open position of the top cover, the DC charging equipment is moved at least partially out of the interior space of the underfloor cabinet.

In an embodiment, the DC charging equipment can be mounted such at the inner surface of the top cover that in the closed position of the top cover the DC charging equipment does not protrude into the surrounding, particularly does not protrude above ground.

In an embodiment, the DC charging equipment can be mounted such at the inner surface of the top cover that in the open position of the top cover, the DC charging equipment is arranged at least partially arranged above ground. Advantageously, an easy access to the DC charging equipment can be provided.

In an embodiment, the DC charging equipment is arranged such at the top cover (particularly the inner surface of the top cover) that the DC charging equipment is at least partially released from (lifted; brought out of) the interior space at the same time as the top cover is opened.

In an embodiment, each of the underfloor distribution units further comprise a dispenser, wherein the dispenser is configured for receiving the direct current provided by the supply unit and for providing the received direct current to the respective charging cable with the charging connector. In an embodiment each underfloor distribution unit of the plurality of underfloor distribution units comprises each one dispenser.

In an embodiment, the one underfloor distribution unit further comprise a dispenser, wherein the dispenser is configured for receiving the direct current provided by the supply unit and for providing the received direct current to the respective charging cable with the charging connector.

In an embodiment, the charging system comprises one dispenser. In an embodiment, the charging system comprises two dispensers. In an embodiment, the charging system comprises three dispensers. In an embodiment, the charging system comprises four dispensers. In an embodiment, the charging system comprises at least five dispensers. In an embodiment, the charging system comprises at least eight dispensers.

The dispenser can be a charging interface. A dispenser can be an interface (an intermediate unit) between the supply unit (particularly the AC-DC converter system) and the underfloor distribution unit (particularly the DC charging equipment). The dispenser can be arranged and configured to direct the converted DC from the supply unit to the DC charging equipment. The dispenser can be arranged and configured to carry the converted direct current (DC) over a distance of up to 150 m to the charging connector and/or the connected electrical vehicle.

An advantage can be that the individual dispensers of the plurality of dispensers can be arranged independent of each other. Each underfloor distribution unit can be considered as an entity that can be arranged independent of the other entities of the charging system. In an embodiment, each underfloor distribution unit (entity) is independent of the other underfloor distribution units (entities) of the charging system.

The dispenser can have a height between 350 mm and 1050 mm. In an embodiment, the dispenser can have a width between 500 mm and 800 mm. In an embodiment, the dispenser can have a depth between 150 mm and 350 mm.

In an embodiment, the dispenser can be a CCS control box. The dispenser can have a height between 350 mm and 550 mm. In an embodiment, the dispenser can have a height of 450 mm. In an embodiment, the dispenser can have a width between 500 mm and 700 mm. In an embodiment, the dispenser can have a width of 600 mm. In an embodiment, the dispenser can have a depth between 150 mm and 350 mm. In an embodiment, the dispenser can have a depth of 250 mm. In an embodiment, the height of the dispenser can be 450 mm, the width of the dispenser can be 600 mm and the depth of the dispenser can be 250 mm.

In an embodiment, the dispenser can be a depot charge box. The dispenser can have a height between 850 mm and 1050 mm. In an embodiment, the dispenser can have a height of 940 mm. In an embodiment, the dispenser can have a width between 600 mm and 800 mm. In an embodiment, the dispenser can have a width of 699 mm. In an embodiment, the dispenser can have a depth between 150 mm and 350 mm. In an embodiment, the dispenser can have a depth of 240 mm. In an embodiment, the height of the dispenser can be 940 mm, the width of the dispenser can be 699 mm and the depth of the dispenser can be 240 mm.

In an embodiment, the dispenser can be configured to provide a charging power of at least 100 kW. In an embodiment, the dispenser can be configured to provide a charging power of at least 150 kW. In an embodiment, the dispenser can be configured to provide a charging power of at least 200 kW. In an embodiment, the dispenser can be configured to provide a charging power of at least 250 kW.

In an embodiment, the dispenser can be configured to provide a maximum charging current of at least 200 A. In an embodiment, the dispenser can be configured to provide a maximum charging current of at least 250 A. In an embodiment, the dispenser can be configured to provide a maximum charging current of at least 400 A. In an embodiment, the dispenser can be configured to provide a maximum charging current of at least 600 A.

A charging distance between the dispenser and the charging connector (particularly the length of the charging cable) can be shorter than the distance between the supply unit and the dispenser. In an embodiment, the charging distance of each underfloor distribution unit is equal. In an embodiment, the length of the charging cable can be between 5 m and 12 m. In an embodiment, the length of the charging cable is 7 m. In an embodiment, the length of the charging cable is 9,5 m.

An advantage can be that the underfloor distribution units can be equally configured. The production and/or installation can advantageously be standardised and/or simplified. The mounting/assembly can be standardised and/or simplified. A replacement of individual units and/or a replacement of one underfloor distribution unit can be simplified.

In an embodiment, the charging system comprises a plurality of dispensers, wherein the dispensers are connected with underfloor distribution units, wherein the dispensers are arranged spatially distant to the connected underfloor distribution units. In an embodiment, the dispensers are arranged in a common underground manhole. The underground manhole can be spatially distant to the underfloor cabinets of the underfloor distribution units. An advantage can be that the plurality of dispensers is easily accessible at once. A joint maintenance of the plurality of dispensers can advantageously be enabled and/or simplified.

In an embodiment, the underfloor distribution units (particularly each underfloor distribution unit of the plurality of underfloor distribution units of the charging system), particularly the dispensers (particularly each dispenser of the plurality of dispensers of the charging system), comprise at least one central control unit. The central control unit can be a control element.

In an embodiment, the underfloor distribution units (particularly each underfloor distribution unit of the plurality of underfloor distribution units of the charging system), particularly the dispensers (particularly each dispenser of the plurality of dispensers of the charging system), comprise an insulation monitoring unit.

In an embodiment, the underfloor distribution units (particularly each underfloor distribution unit of the plurality of underfloor distribution units of the charging system), particularly the dispensers (particularly each dispenser of the plurality of dispensers of the charging system), comprise a DC surge protection unit.

In an embodiment, the underfloor distribution units (particularly each underfloor distribution unit of the plurality of underfloor distribution units of the charging system), particularly the dispensers (particularly each dispenser of the plurality of dispensers of the charging system), comprise at least one central control unit and an insulation monitoring unit.

In an embodiment, the underfloor distribution units (particularly each underfloor distribution unit of the plurality of underfloor distribution units of the charging system), particularly the dispensers (particularly each dispenser of the plurality of dispensers of the charging system), comprise at least one central control unit and a DC surge protection unit.

In an embodiment, the underfloor distribution units (particularly each underfloor distribution unit of the plurality of underfloor distribution units of the charging system), particularly the dispensers (particularly each dispenser of the plurality of dispensers of the charging system), comprise an insulation monitoring unit and a DC surge protection unit.

In an embodiment, the underfloor distribution units (particularly each underfloor distribution unit of the plurality of underfloor distribution units of the charging system), particularly the dispensers (particularly each dispenser of the plurality of dispensers of the charging system), comprise at least one central control unit, an insulation monitoring unit and a DC surge protection unit.

In an embodiment, the underfloor distribution unit of the charging system, particularly the dispenser, comprises at least one central control unit, an insulation monitoring unit and/or a DC surge protection unit.

The central control unit can be configured to manage the system security and/or system reliability. The central control unit can be configured to manage the security and/or reliability of the respective underfloor distribution unit. The central control unit can be configured to control the functioning of the respective underfloor distribution unit. The central control unit can be configured to control the functioning of the respective dispenser. The central control unit can be configured to control the functioning of the DC charging equipment. The central control unit can be configured to monitor and/or analyse the status of the dispenser. The central control unit can be configured to continuously (continuously in time) monitor and/or analyse the status of the underfloor distribution unit (particularly the dispenser and/or the DC charging equipment). The central control unit can be configured to monitor and/or analyse the charging process. The central control unit can be configured to trace the charging process. The central control unit can be configured to monitor and/or analyse the charging status. The central control unit can be configured to terminate the charging process. The central control unit can be configured for climate control (of the respective underfloor distribution unit). The central control unit can be configured to monitor climatic parameters (of the respective underfloor distribution unit), e.g. the temperature and/or the humidity. The central control unit can be configured to control climatic parameters (of the respective underfloor distribution unit). The central control unit can be configured for communication with the supply unit. The central control unit can be configured for communication between the dispenser of the respective underfloor distribution unit and the supply unit. The central control unit can be configured to process a charging protocol from a vehicle (particularly from a connected vehicle). The central control unit can be configured to transmit the charging protocol from the vehicle to the supply unit.

The insulation monitoring unit can be configured to monitor and/or analyse the electrical insulation of the underfloor distribution unit. The insulation monitoring unit can be configured to continuously monitor the electrical insulation of the underfloor distribution unit. The insulation monitoring unit can be configured to continuously monitor the insulation resistance of the underfloor distribution unit. The insulation monitoring unit can be configured to continuously monitor the insulation resistance of an IT system (unearthed system). The insulation monitoring unit can be configured to issue an alarm if the insulation resistance value falls below a pre-determined response value. An advantage can be that the insulation monitoring device can detect deteriorations of the insulation level at an early stage and in a reliable way.

The DC surge protection unit (DC surge protection device; SPD) can be configured to limit transient over voltages of atmospheric origin and divert current waves to earth. The DC surge protection unit can be configured to limit the amplitude of the over voltage to a value that is not hazardous for the underfloor distribution unit. The DC surge protection unit can be configured to limit the amplitude of the over voltage to a value that is not hazardous for the dispenser. The DC surge protection unit can be configured to limit the amplitude of the over voltage to a value that is not hazardous for the electrical installation and electric switchgear.

In an embodiment, the underfloor distribution units (particularly each underfloor distribution unit of the plurality of underfloor distribution units of the charging system), particularly the dispensers (particularly each dispenser of the plurality of dispenser of the charging system), comprise a communication unit for communication with the supply unit.

In an embodiment, the underfloor distribution unit of the charging system, particularly the dispenser, comprises a communication unit for communication with the supply unit.

The supply unit can comprise at least one communication means configured for the communication with the communication unit of the underfloor distribution unit. The supply unit can comprise at least one communication means configured for the communication with the communication units of the underfloor distribution units. The communication units of the underfloor distribution units can be configured to communicate with the at least one central control unit of the respective underfloor distribution unit. The communication unit can be configured to communicate the information provided by the central control unit to the supply unit (particularly the communication means of the supply unit). The central control unit can be configured to transmit information (e.g. collected data and/or a charging status) to the communication unit. The central control unit can be configured to receive information and/or an instruction from the communication unit.

The communication between the supply unit and the underfloor distribution unit, particularly the dispenser, can be a CAN communication. The communication between the supply unit and the underfloor distribution unit, particularly the dispenser, can be an Ethernet communication. The communication between the supply unit and the underfloor distribution unit, particularly the dispenser, can be a CAN2Ethernet communication. The communication between the supply unit and the underfloor distribution unit, particularly the dispenser, can be an optical communication (e.g. fiber optics).

The communication means of the supply unit can be configured for communication with a data network. The communication means of the supply unit can be configured for communication with the internet and/or with a cloud.

In an embodiment, the underfloor cabinet comprises a cable outlet configured to guide the charging cable, when the charging connector is received from the underfloor cabinet.

In an embodiment, each underfloor cabinet of the plurality of underfloor distribution units, comprises a cable outlet configured to guide the respective charging cable, when the respective charging connector is received from the respective underfloor cabinet.

In an embodiment, the underfloor cabinet comprises a cable outlet configured to guide the charging cable, when the DC charging equipment is arranged in the operating position.

In an embodiment, the top cover of the underfloor cabinet comprises the cable outlet. The cable outlet can comprise a hatch, particularly a hatch arranged in the top cover. In an embodiment, the cable outlet is formed by a portion of the circumferential wall and a portion of the top cover. The cable outlet can be configured such that when the DC charging equipment is retrieved from the interior space, particularly when the DC charging equipment is in the operating position, the charging cable can be guided through the cable outlet such that when the DC charging equipment is retrieved from the interior space, particularly when the DC charging equipment is in the operating position, the top cover can be arranged in the closed position. Advantageously, the charging system can be configured such that the when the DC charging equipment is in the operating position, the extracted charging cable (e.g. when the charging connector is in use and connected with the vehicle) does not prevent the top cover from closing. Advantageously, also during the charging process, the top cover of the respective underfloor cabinet can form a portion of the driving surface. The risk of accidents and/or damages can advantageously be reduced.

In an embodiment, the top cover comprises an information unit configured for indicating a charging status of the electrical vehicle connected to the DC charging equipment, particularly connected with the DC charging equipment of the respective underfloor distribution unit.

In an embodiment, the top cover comprises an information unit configured for indicating a status of the underfloor distribution unit, particularly of the respective underfloor distribution unit.

In an embodiment, the top cover comprises an information unit configured for indicating a charging status of the electrical vehicle connected to the DC charging equipment and for indicating a status of the underfloor distribution unit.

In an embodiment, the information unit comprises an LED. In an embodiment, the information unit comprises a plurality of LEDs. The information unit can comprise a plurality of different LEDs, e.g. LEDs of different colour.

In an embodiment, the control unit of the underfloor distribution unit is configured for communication with the information unit. In an embodiment, the information unit is configured to indicate and/or display information received from the control unit. In an embodiment, the control means of the supply unit is configured for communication with the information unit. In an embodiment, the information unit is configured to indicate and/or display information received from the supply unit.

The charging status of the electrical vehicle connected to the DC charging equipment, particularly connected with the DC charging equipment of the respective underfloor distribution unit, can be a percentage of the loading level of the connected electrical vehicle. The charging status can be indicated by the number of LEDs. For instance, the higher the loading level, the more LEDs are active. In an embodiment, the charging status can be indicated by the colour of the active LED. For instance, a charging status below a pre-determined threshold (e.g. below 30%) can be indicated by a red light. For instance, a charging status above a pre-determined threshold (e.g. above 70%) can be indicated by a green light. In an embodiment, the charging status can be indicated by a flashing frequency. In an embodiment, a faster flashing can indicate a higher charging status.

In an embodiment, the information unit is configured to indicate when the respective underfloor distribution unit is ready-to-use. In an embodiment, the information unit is configured to indicate when the respective underfloor distribution unit is out of order. In an embodiment, the information unit is configured to indicate when the respective underfloor distribution unit is in use (occupied).

Advantageously, information regarding the charging process and/or information about the availability of the underfloor distribution cabinet can be visible from above the driving surface. An advantage can be that it is therefore not necessary to open the top cover to access this information. Advantageously, the user-friendliness can be increased.

In an embodiment, the underfloor distribution units, particularly the underfloor cabinets, are configured for ingress protection. In an embodiment, the underfloor distribution units, particularly the underfloor cabinets, are configured for protection against moisture ingress. In an embodiment, the underfloor distribution units, particularly the underfloor cabinets, are configured for protection against condensation. In an embodiment, the underfloor distribution units, particularly the underfloor cabinets, are configured for protection against moisture ingress and condensation.

In an embodiment, the underfloor distribution units, particularly the underfloor cabinets, are resistant to loads with a weight of at least 40 t. In an embodiment, the top cover of the underfloor cabinet is resistant to loads with a weight of at least 40 t.

In an embodiment, the information unit is resistant to loads with a weight of at least 40 t. In an embodiment, each information unit of a top cover is resistant to loads with a weight of at least 40 t.

In an embodiment, the underfloor distribution units, particularly the underfloor cabinets, are configured for protection against moisture ingress and/or condensation, and the underfloor distribution units, particularly the underfloor cabinets, are resistant to loads with a weight of at least 40 t. In an embodiment, the underfloor distribution units, particularly the underfloor cabinets, are configured for protection against moisture ingress and/or condensation, and the information unit is resistant to loads with a weight of at least 40 t. In an embodiment, the underfloor distribution units, particularly the underfloor cabinets, are resistant to loads with a weight of at least 40 t and the information unit is resistant to loads with a weight of at least 40 t. In an embodiment, the underfloor distribution units, particularly the underfloor cabinets, are configured for protection against moisture ingress and/or condensation, the underfloor distribution units, particularly the underfloor cabinets, are resistant to loads with a weight of at least 40 t and the information unit is resistant to loads with a weight of at least 40 t.

In an embodiment, the underfloor distribution unit, particularly the underfloor cabinet, is configured for ingress protection, particularly wherein the underfloor distribution unit, particularly the underfloor cabinet, is configured for protection against moisture ingress and/or condensation, and/or wherein the underfloor distribution unit, particularly the underfloor cabinet, is resistant to loads with a weight of at least 40 t and/or wherein the information unit is resistant to loads with a weight of at least 40 t.

Each underfloor distribution unit of the plurality of underfloor distribution units can be configured for protection against moisture ingress and/or condensation.

The underfloor distribution units can comprise a sealing device. The underfloor distribution units can comprise a rubber gasket. The underfloor distribution units can comprise an O-ring, configured and arranged for sealing.

In an embodiment, the underfloor distribution unit (particularly each underfloor distribution unit of the plurality of underfloor distribution units) comprises an adjustable thermostat. The adjustable thermostat can be configured for temperature control of the interior space. In an embodiment, the adjustable thermostat can be configured for frost protection. The thermostat can control the temperature of the interior space of the underfloor cabinet such that the temperature is kept above a pre-determined lower threshold temperature. The thermostat can control the temperature of the interior space of the underfloor cabinet such that the temperature does not fall below the pre-determined lower threshold temperature. In an embodiment, the thermostat can control the temperature of the interior space of the underfloor cabinet such that the temperature is kept in a pre-determined temperature range. In an embodiment, the thermostat can be configured such that condensation is prevented. In an embodiment, the adjustable thermostat is permanently set to the values for frost protection and protection against condensation. In an embodiment, the pre-determined lower threshold temperature and/or the pre-determined temperature range are pre-fixed. In an embodiment, the thermostat is not adjustable by the user/customer.

An advantage can be that an energy saving frost protection can be provided. The functioning of the charging system can advantageously be improved.

In an embodiment, the underfloor distribution unit is configured in accordance with the DIN EN 124 standard, particularly load class D400. In an embodiment, the underfloor cabinet unit is configured in accordance with the DIN EN 124 standard, particularly load class D400. The underfloor distribution unit can be configured such that it can carry a total weight of at least 40 t. The underfloor distribution unit can be configured such that large electric vehicles, such as trucks or busses, can safely drive on (and/or stand on) the underfloor distribution unit of the charging system, particularly on the underfloor cabinet (particularly on the top cover).

In an embodiment, the information unit is configured in accordance with the DIN EN 124 standard, particularly load class D400. The information unit can be configured such that it can carry a total weight of at least 40 t. The information unit can be configured such that large electric vehicles, such as trucks or busses, can safely drive on (and/or stand on) the information unit.

In advantage can be that the work safety is increased. A further advantage can be that the underfloor distribution unit and/or the information unit can form part of the driving area which can be used without restriction by heavy vehicles. The user-friendliness can advantageously be increased.

In an embodiment, the charging system is configured according to electrical protection class 1. In an embodiment, the electrically conductive parts of the charging system are connected to earth potential. The supply unit can have protection class 1. The underfloor distribution unit can have protection class 1. In an embodiment, the supply unit and/or the underfloor distribution units configured for IEC protection class I. In an embodiment, all conductive housing parts are connected to earth potential.

In an embodiment, the supply unit and the underfloor distribution units, particularly the dispensers, are configured such that each underfloor distribution unit is individually addressable by the supply unit. In an embodiment, the supply unit and the dispensers (particularly each dispenser of the charging system) are configured such that each dispenser is individually addressable by the supply unit. In an embodiment, the supply unit and the DC charging equipment (particularly DC charging equipment of each underfloor distribution unit) are configured such that each DC charging equipment is individually addressable by the supply unit.

Each underfloor distribution unit can be individually addressed by the supply unit. Each underfloor distribution unit can be addressed differently by the supply unit. In an embodiment, the charging system can be configured such that the supply unit can provide a different amount of DC to the different underfloor distribution units. In an embodiment, the charging system can be configured such that the supply unit can provide the same amount of DC to the different underfloor distribution units. In an embodiment, the charging system can be configured such that the supply unit can provide the same amount of DC to the plurality of underfloor distribution units.

An advantage can be that the charging system can be configured for charging of vehicles with different configurations/demands.

An advantage can be that in the event of a loss of one underfloor distribution unit (or dispenser or DC charging equipment), the functioning of the remaining underfloor distribution units of the charging system is not affected. Advantageously, downtimes can be reduced.

In an embodiment, the supply unit and the underfloor distribution units, particularly the dispensers, are configured such that power is distributable by the supply unit simultaneously to at least two of the plurality of underfloor distribution units. In an embodiment, the supply unit and the dispensers (particularly each dispenser of the charging system), are configured such that power is distributable by the supply unit simultaneously to at least two of the plurality of dispensers. In an embodiment, the supply unit and the DC charging equipment (particularly DC charging equipment of each underfloor distribution unit), are configured such that power is distributable by the supply unit simultaneously to at least two of the DC charging equipment.

An advantage can be that the power can be distributed to a plurality of charging connectors. Advantageously, a simultaneous charging (parallel charging) of multiple vehicles can be enabled. In an embodiment, the charging system is configured such that simultaneous charging of four vehicles (via one supply unit) can be enabled. An advantage can be that the fleet of busses and/or the fleet of trucks can be charged faster. An advantage can be that the costs can be reduced because one supply unit is required for a plurality of dispensers. Further, advantageously, demands of different vehicles of the fleet can be taken into account by the same supply unit.

In an embodiment, the supply unit and the underfloor distribution units, particularly the dispensers, are configured such that power is dynamically distributable by the supply unit to the underfloor distribution units, particularly to the dispensers. In an embodiment, the supply unit and the dispensers are configured such that power is dynamically distributable by the supply unit to a plurality of the dispensers.

In an embodiment, the AC-DC converter system comprises a plurality of AC-DC converters, wherein each DC charging equipment is electrically connectable to at least one AC-DC converter. In an embodiment, the AC-DC converter system comprises a plurality of AC-DC converters, wherein each dispenser is electrically connectable to at least one AC-DC converter.

In an embodiment, the charging power provided by the supply unit, particularly by the AC-DC converter system can be distributed to the plurality of charging points. In an embodiment, the charging power provided by the supply unit, particularly by the AC-DC converter system can be distributed to the underfloor distribution units. In an embodiment, the charging power provided by the supply unit, particularly by the AC-DC converter system, can be distributed to at least one dispenser. In an embodiment, the charging power provided by the supply unit, particularly by the AC-DC converter system can be distributed to at least two dispensers. In an embodiment, the charging power provided by the supply unit, particularly by the AC-DC converter system can be distributed to the plurality of dispensers. In an embodiment, the charging power provided by the supply unit, particularly by the AC-DC converter system can be distributed to the DC charging equipment of the underfloor distribution unit. In an embodiment, the charging power provided by the supply unit, particularly by the AC-DC converter system can be distributed to the DC charging equipment of at least two underfloor distribution units. In an embodiment, the charging power provided by the supply unit, particularly by the AC-DC converter system can be distributed to the DC charging equipment of the plurality of underfloor distribution units.

In an embodiment, the charging power can be distributed to individual outputs.

In an embodiment, the AC-DC converter system comprises a plurality of identical AC-DC converters.

In an embodiment, the charging system is configured such that the assignment of a particular AC-DC converter to a respective DC charging equipment is adaptable, particularly temporarily flexibly adaptable. For instance, for a first period of time, a first AC-DC converter of the plurality of AC-DC converters and a second AC-DC converter of the plurality of AC-DC converters can be assigned to a first DC charging equipment; while for a subsequent second period of time, the first AC-DC converter can be assigned to the first DC charging equipment and the second AC-DC converter can be assigned to a second DC charging equipment.

The charging system can be arranged and configured such that the charging power provided by the supply unit can be distributed to a plurality of charging points. The charging system can be arranged and configured such that a plurality of charging point can simultaneously be addressed and/or fed by the supply unit.

In an embodiment, the charging system comprises a switchable connection matrix. In an embodiment, the charging system can be arranged and configured for charging according to a connection matrix. An embodiment of a (switchable) connection matrix is described in the application US 2018/0212438 A1. The entire content of this application is hereby incorporated by reference. In the application US 2018/0212438 A1 a charging system for electric vehicles is described, wherein the charging system comprises a plurality of charging ports, each with an interface for power exchange with at least one electric vehicle, a plurality of power converters for converting power from a power source to a desired format for charging the vehicle, a switchable connection matrix for connecting at least one power converter to at least one charging port, at least one controller for controlling at least one of the power converters, and/or for controlling the switching operations of the connection matrix and at least one power converter, and communication means for exchanging parameters with the at least one electrical vehicle. According to an embodiment, the power converter and the connection matrix can be at a remote location from the charging port.

In an embodiment, the switchable connection matrix connects the supply unit and the plurality of underfloor distribution units. In an embodiment, the switchable connection matrix connects the AC-DC converter system and the plurality of underfloor distribution units. In an embodiment, the switchable connection matrix connects the plurality of AC-DC converters and the plurality of underfloor distribution units. In an embodiment, the switchable connection matrix is comprised in the supply unit. In an embodiment, the supply unit comprises the switchable connection matrix. In an embodiment, the switchable connection matrix can be at a remote location from the underfloor distribution units. In an embodiment, the switchable connection matrix can be arranged spatially distant from the underfloor distribution units.

The switchable connection matrix can be configured such that power (particularly power provided by the supply unit) is distributable by the supply unit simultaneously to at least two of the plurality of underfloor distribution units. The switchable connection matrix can be configured such that power (particularly power provided by the supply unit) is dynamically distributable by the supply unit to the underfloor distribution units, particularly to the dispensers. The switchable connection matrix can be configured such that each DC charging equipment is electrically connectable to at least one AC-DC converter.

In an embodiment, the switchable connection matrix can connect multiple inputs (e.g. multiple AC-DC converter) and multiple outputs (e.g. multiple dispensers, multiple DC charging equipments or multiple charging connectors). In an embodiment, the switchable connection matrix can adjustable connect multiple inputs (e.g. multiple AC-DC converter) and multiple outputs (e.g. multiple dispensers, multiple DC charging equipments or multiple charging connectors).

The charging system can be configured such that a priority of each of the outputs can be determined. The charging system can be configured such that a power request at each output can be determined. In an embodiment, the charging system can be configured such that based on the priority and/or based on the power request, the power provided by the supply unit (particularly by the multiple AC-DC converters) can be distributed among the multiple outputs (e.g. multiple dispensers, multiple DC charging equipments or multiple charging connectors).

In an embodiment, the charging system can be configured such that the priority and/or the power request can be determined repeatedly. In an embodiment, the priority and/or the power request can be determined after an event. In an embodiment, the event can be the connection of a charging connector to a charging inlet of an electric vehicle (particularly for charging). In an embodiment, the event can be the disconnection of a charging connector from a charging inlet of an electric vehicle (particularly after termination of a charging process). In an embodiment, the event can be a change of charging parameters (e.g. charge preferences). In an embodiment, the event can be that the power demand is substantially changed during the charging process.

The priority can be determined by a time of arrival at the charging system (particularly time of connection of the connector to the vehicle). The priority can be determined by an order of arrival of a plurality of vehicles at the charging system (particularly time of connection of the connector to the vehicle).

In an embodiment, the power requested at each output (particularly at each DC charging equipment) can be determined by the central control unit of each underfloor distribution unit. In an embodiment, the power requested at each output (particularly at each DC charging equipment) can be determined by the control means of the supply unit. In an embodiment, the charging system comprises an additional controller configured to determine the power requested at each output (particularly at each DC charging equipment).

In an embodiment, the control means of the supply unit is configured to distribute the DC provided by the supply unit to the DC charging equipment in accordance with the determined power request and/or the determined priority. In an embodiment, the controller of the charging system is configured to distribute the DC provided by the supply unit to the DC charging equipment in accordance with the determined power request and/or the determined priority.

In an embodiment, the charging system can be configured such that different demands of different vehicles can be taken into consideration. An advantage can be that different vehicles can be supported. Advantageously, even in the case of a fleet comprising vehicles with different requirements, there may be no need to provide different charging systems. Advantageously, installation, assembly and/or maintenance can be standardised and/or simplified. The user-friendliness can advantageously be increased.

In an embodiment, the charging system further comprises a network interface for connecting the charging system to a data network, wherein the charging system is operatively connected to the network interface for at least one of carrying out a command received from the data network and sending status information of the charging system to the data network.

According to an aspect, the charging system may further comprise a network interface for connecting the charging system to a data network, in particular a global data network. The data network may be a TCP/IP network such as Internet. The charging system can be operatively connected to the network interface for carrying out commands received from the data network. The commands may include a control command for controlling the charging system to carry out a task such as providing information with regard to a charging process, initiate an analysis of a central control unit of an underfloor distribution unit, and/or changing charging parameters. In this case, the charging system can be adapted for carrying out the task in response to the control command. The commands may include a status request. In response to the status request, or without prior status request, the charging system may be adapted for sending a status information to the network interface, and the network interface is then adapted for sending the status information over the network. The commands may include an update command including update data. In this case, the charging system can be adapted for initiating an update in response to the update command and using the update data.

In an embodiment, the data network may be an Ethernet network using TCP/IP such as LAN, WAN or Internet. The data network may comprise distributed storage units such as Cloud. Depending on the application, the Cloud can be in form of public, private, hybrid or community Cloud.

In an embodiment, the charging system, particularly the underfloor distribution unit comprises a SIM card for communication via the mobile phone network.

A further aspect of the invention relates to a method of electrically charging an electric vehicle by the charging system according to the invention. The method includes
- providing the electric vehicle on the driving surface,
- retrieving, with the top cover being in the open position, the charging cable (particularly the charging cable with the charging connector) from the interior space of the underfloor cabinet,
- connecting the charging connector to the electric vehicle, particularly to the charging inlet of the electric vehicle,
- providing direct current by the supply unit via the charging cable and the charging connector to the electric vehicle for charging the electric vehicle,
- disconnecting the charging connector from the electric vehicle,
- storing the charging cable (particularly the charging cable with the charging connector) to the interior space of the underfloor cabinet; and
- closing the top cover, particularly such that the top cover is in the closed position.

In an embodiment, the method includes
- providing the electric vehicle on the driving surface,
- moving the top cover in the open position,
- moving the charging connector to the operating position,
- connecting the charging connector to the electric vehicle, particularly to the charging inlet of the electric vehicle,
- providing direct current by the supply unit via the charging cable and the charging connector to the electric vehicle for charging the electric vehicle,
- disconnecting the charging connector from the electric vehicle,
- moving the charging to the storing position; and
- moving the top cover in the closed position.

In an embodiment, after moving the charging connector to the operating position and/or after retrieving, with the top cover being in the open position, the charging cable from the interior space of the underfloor cabinet, the top cover can be moved in the closed position. In particular, during the charging process, the top cover can be arranged in the closed position. The charging cable can be guided through the cable outlet.

In an embodiment, after disconnecting the charging connector from the electric vehicle, the top cover can be moved in the open position.

In an embodiment, the top cover can be moved in the closed position after moving the charging connector to the operating position and/or after retrieving, with the top cover being in the open position, the charging cable from the interior space of the underfloor cabinet, and the top cover can be moved in the open position after disconnecting the charging connector from the electric vehicle. An advantage can be that during the charging process, the top cover can be arranged in the closed position. An advantage can be that during the charging process, the top cover, particularly the outer surface, can form a portion of the driving area. An advantage can be that the risk of an accident will be reduced.

### Brief description of the drawings

Further features and embodiments of the present invention are described in the following with reference to the Figures, wherein:
- Fig. 1: shows a schematic view of an embodiment of a charging system, comprising a plurality of dispensers each arranged in each one corresponding underfloor cabinet,
- Fig. 2: shows a schematic view of an embodiment of a charging system, comprising a plurality of dispensers each arranged at each one top cover,
- Fig. 3: shows a schematic view of an embodiment of a charging system, comprising a plurality of dispensers in a common manhole,
- Fig. 4: shows a schematic view of an embodiment of a charging system, comprising a supply unit with a plurality of AC/DC converters,
- Fig. 5: shows a schematic view of an embodiment of a charging system, comprising a supply unit with a plurality of AC/DC converters,
- Fig. 6: shows a schematic view of an embodiment of a charging system further comprising a network,
- Fig. 7: shows a schematic top view of an embodiment of a top cover,
- Fig. 8: shows a schematic illustration of a connection matrix.

### Detailed description of embodiments

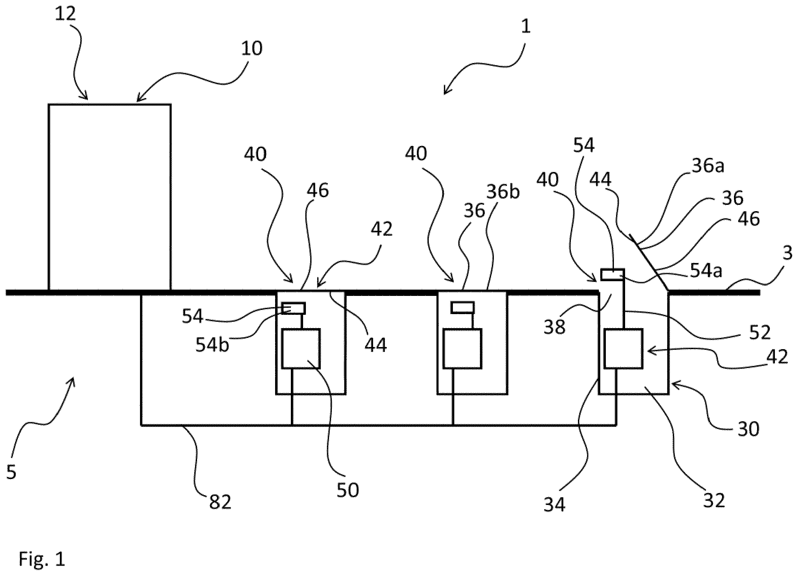

A charging system 1 can comprise a supply unit 10. The charging system 1 can comprise an of underfloor distribution unit 40. The charging system 1 can comprise a plurality of underfloor distribution units 40 (Figs 1 to 6).

Each underfloor distribution unit 40 can comprise each one underfloor cabinet 30. The underfloor cabinets 30 can at least partially be arranged in the underground 5. In the embodiment, at least one underfloor cabinet 30 (particularly each underfloor cabinet 30) can be arranged at least partially below a driving surface 3. The supply unit 10 can be arranged above ground. The supply unit 10 can be arranged distant to the underfloor cabinets 30. In particular, the supply unit 10 can be arranged distant to the driving surface 3 (Figs 1 to 6).

The plurality of underfloor distribution units 40 can be electrically connected with the supply unit 10. In particular, each underfloor distribution unit 40 of the plurality of underfloor distribution units 40 can be electrically connected with the supply unit 10. (Figs 1 to 6).

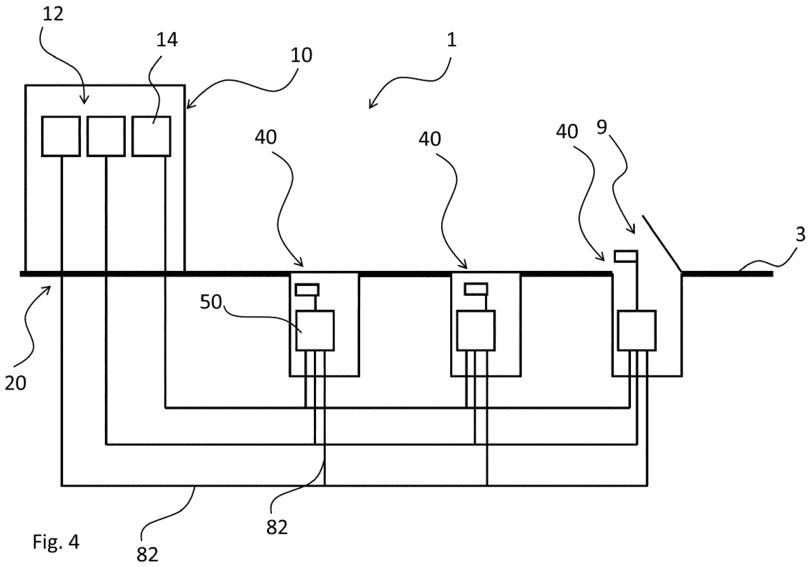

An underground cable 82 (or a plurality of underground cables 82) can electrically connect the supply unit 10 to the underfloor distribution units 40 (Figs 1 to 6). A DC underground cable 82 (or a plurality of DC underground cables 82) can electrically connect the supply unit 10 to the underfloor distribution units 40. The connection between the supply unit 10 and the underfloor distribution unit 40 can be an underground connection. The connection between the supply unit 10 and the underfloor distribution units 40 can be enabled by a connection matrix 20 (Figs 4, 5, 8). The connection between the supply unit 10 and the underfloor distribution units 40 can comprise a connection matrix 20. In an embodiment, the supply unit 10 can comprise the connection matrix 20.

The supply unit 10 can comprise an AC-DC converter system 12. The AC-DC converter system 12 can be configured to convert alternating current, AC, to direct current, DC. The AC-DC converter system 12 can be configured to provide the DC to an underfloor distribution unit 40. The AC-DC converter system 12 can be configured to provide the DC to a DC charging equipment 42 of the underfloor distribution unit 40 (Figs 1 to 6, 8). The AC-DC converter system 12 can be configured to provide the DC to a dispenser 50 (Figs 1 to 6). In an embodiment, the AC-DC converter system is electrically connected with the underfloor distribution unit 40. In an embodiment, the AC-DC converter system is electrically connected with the underfloor distribution unit 40 via the underground cable 82. In an embodiment, the AC-DC converter system is electrically connected with the underfloor distribution units 40 via the connection matrix 20 (Figs 4, 5, 8). In an embodiment, the AC-DC converter system is electrically connected with the DC charging equipment 42. In an embodiment, the AC-DC converter system is electrically connected with the dispenser 50.

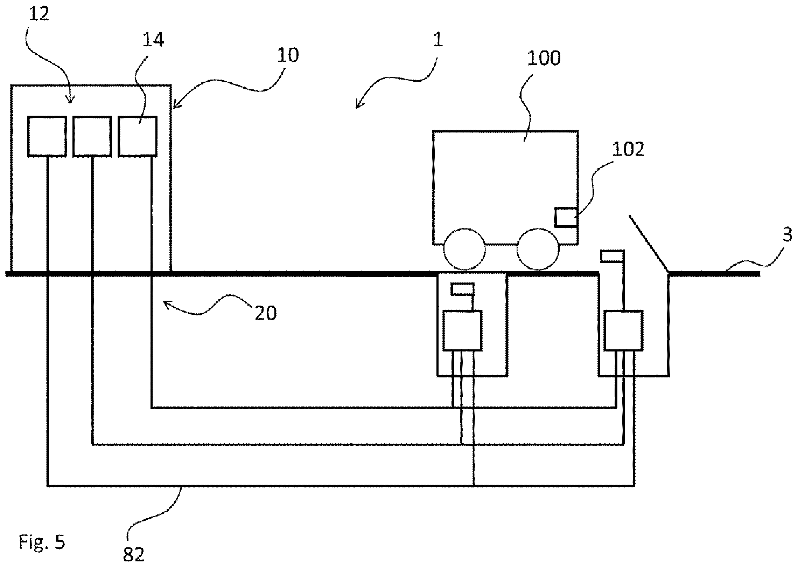

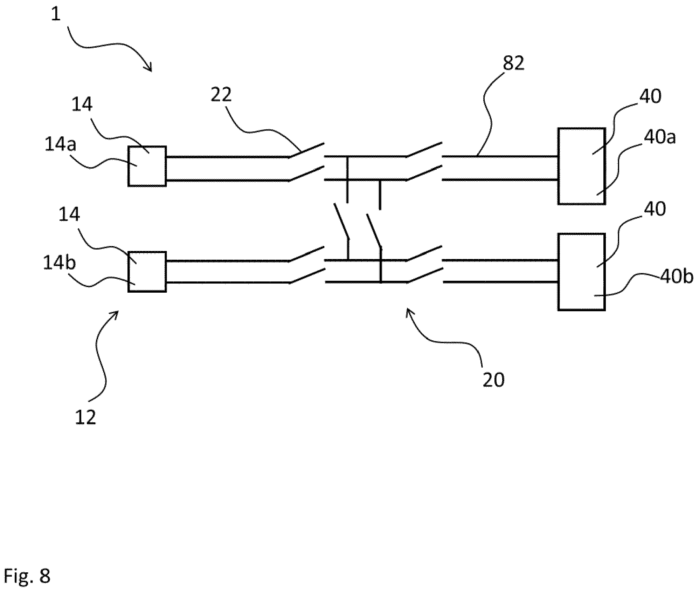

The AC-DC converter system 12 can comprise at least one AC-DC converter 14. In an embodiment, the AC-DC converter system 12 can comprise a plurality of AC-DC converters 14 (see Figs 4, 5, 8). The number of AC-DC converters 14 can be equal to the number of underfloor distribution units 40 (see Figs 4, 8). In an embodiment, the charging system 1 can comprise more AC-DC converters 14 than underfloor distribution units 40. In an embodiment, the charging system 1 can comprise more AC-DC converters 14 than dispensers (see Fig. 5). The AC-DC converters 14 can be connected with the underfloor distribution units 40 via a connection matrix 20 (Figs 4, 5, 8).

In an embodiment, each underfloor distribution unit 40 of the plurality of underfloor distribution units 40 comprises a DC charging equipment 42. In an embodiment, each underfloor distribution unit 40 of the plurality of underfloor distribution units 40 comprises an underfloor cabinet 30.

The DC charging equipment 42 can comprise a charging cable 52 with a charging connector 54. In an embodiment, the charging cable 52 connects the charging connector 54 and the dispenser 50. Via the charging cable 52, the charging connector 54 can be electrically connected with the dispenser 50. The dispenser 50 can be connected with the supply unit 10, particularly with the AC-DC converter system 12. In an embodiment, the dispenser 50 can connect the AC-DC converter system 12 with the charging cable 52.

In an embodiment, the DC charging equipment 42 comprises the dispenser 50. The dispenser 50 can be arranged in the same underfloor cabinet 30 as the charging cable 52 and the charging connector 54 connected with the respective dispenser 50 (see Figs 1, 2, 4, 5, 6). In an embodiment, each dispenser 50 is arranged in each one underfloor cabinet 30. In an embodiment, each underfloor cabinet 30 comprises each one dispenser 50 with a connected charging cable 52 with the charging connector 54.

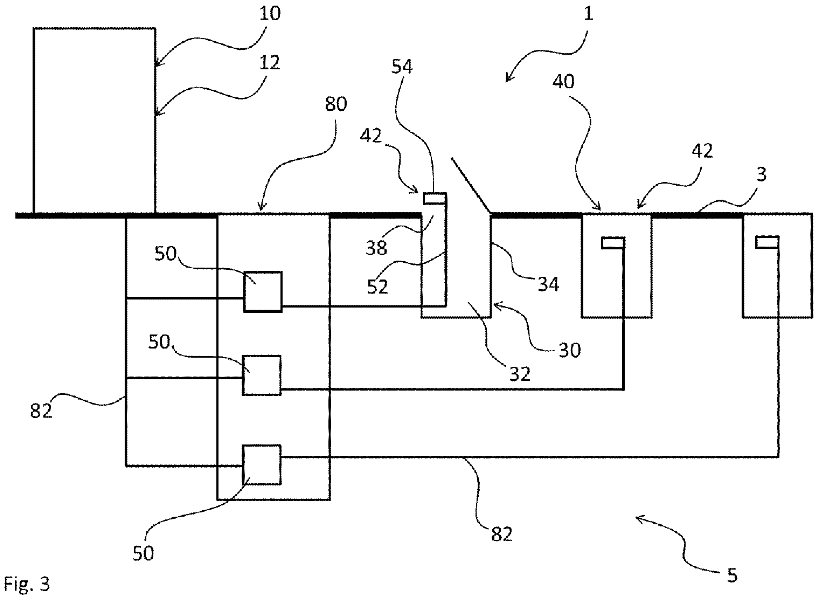

In an embodiment, the dispenser 50 is arranged in a manhole 80 spatially separated from the underfloor cabinet 30, wherein the charging cable 52 and the charging connector 54 are arranged in the underfloor cabinet 30. In an embodiment, each dispenser 50 of the charging system 1 is arranged in a common manhole 80. In an embodiment, each dispenser 50 is arranged in the common manhole 80 spatially separated from the underfloor cabinet 30, wherein each associated charging cable 52 with the connected charging connector 54 is arranged in each one respective underfloor cabinet 30 (see Fig. 3).

In an embodiment, the underfloor cabinet 30 comprises a housing 34. The housing 34 can surround an interior space 32 (interior space 32 of the underfloor cabinet 30). The housing 34 can comprise a bottom 35. The bottom 35 can constitute a lower boundary of the interior space 32. The housing 34 can comprise a circumferential wall 37. The circumferential wall 37 can constitute a lateral boundary of the interior space 32. The housing 34 can comprise a top cover 36. The circumferential wall 37 can be arranged between the bottom 35 and the top cover 36.

The housing 34 can comprise a top opening 38. In an embodiment, the top opening 38 is defined by the circumferential wall 37, particularly by an upper edge of the circumferential wall 37. The top opening 38 can be arranged and configured such that the interior space 32 of the underfloor cabinet 30 is accessible via the top opening 38. The top opening 38 can provide an access to the interior space 32, particularly from an exterior. The top opening 38 can provide an access to the interior space 32, particularly from above the underfloor cabinet 30. In an embodiment, the top opening 38 can be configured to provide an access to the interior space 32 from above the driving surface 3.

The top cover 36 can be arranged and configured to be in a closed position (36b). In an embodiment, the top cover 36 can be arranged and configured to be in an open position (36a). The top cover 36 can be transferable from the closed position (36b) to the open position (36a). The top cover 36 can be transferable from the open position (36a) to the closed position (36b). In an embodiment, the top cover 36 can be repeatedly, reversibly transferable from the closed position (36b) to the open position (36a). In an embodiment, the top cover 36 can be repeatedly, reversibly transferable from the open position (36a) to the closed position (36a). In an embodiment, the top cover 36 can be hingeable.

In a closed position (36b), the top cover 36 can cover the top opening 38. In a closed position (36b), the top cover 36 can seal the top opening 38. In the closed position (36b), the top cover 36 can protect the interior space 32 from an external access.

The underfloor cabinet 30 can be configured and arranged such that the top cover 36 can form at least a portion of the driving surface, when the top cover 36 is in the closed position (36b). In an embodiment, the top cover 36 can flush with the surrounding surface (particularly surrounding driving surface 3), when the top cover 36 is in the closed position (36b). In a closed position (36b), the top cover 36 can be driven on by a vehicle, particularly an electrical vehicle 100 (see Fig. 5; left top cover 36 in closed position 36b). The electrical vehicle 100 can comprise a charging inlet 102. The charging inlet 102 can be compatible with the charging connector 54 of the charging system 1. The charging connector 54 can be a CCS plug. The charging connector 54 can be an MCS plug.

In an open position (36a), the top cover 36 can open the top opening 38. In the open position (36a), the interior space 32 of the underfloor cabinet 30 can be accessible via the top opening 38.

The charging connector 54 can be arranged in an operating position (54a). The charging connector 54 can be arranged in a storing position (54b) (Figs 1 to 6). In the operating position (54a), the charging connector 54 can be retrieved from the interior space 32 of the underfloor cabinet 30. In the operating position (54a), the charging connector 54 can be arranged outside the interior space 32 of the underfloor cabinet 30. In the operating position (54a), the charging connector 54 can be arranged above the ground, particularly above the driving surface 3. In the storing position (54b), the charging connector 54 can be arranged in the interior space 32 of the underfloor cabinet 30. In the storing position (54b), the charging connector 54 can be arranged below (beneath) the driving surface 3.

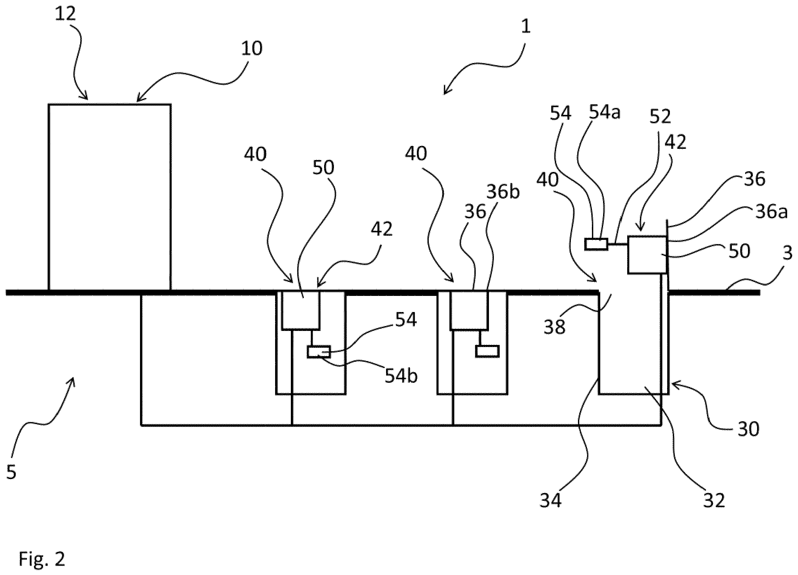

In an embodiment, the DC charging equipment 42, particularly the charging connector 54, can be arranged at the top cover 36, particularly at the inner surface 44 of the top cover 36 (Fig. 2). The DC charging equipment 42 can be arranged such at the top cover 36 and the top cover 36 can be configured such that when the top cover 36 is in the open position (36a), the charging connector 54 is in the operating position (54a). The DC charging equipment 42 can be arranged such at the top cover 36 and the top cover 36 can be configured such that when the top cover 36 is in the closed position (36b), the charging connector 54 is in the storing position (54b). The charging connector 54 can be arranged such at the top cover 36 and the top cover 36 can be configured such that when the top cover 36 is in the open position (36a), the charging connector 54 is in the operating position (54a). The charging connector 54 can be arranged such at the top cover 36 and the top cover 36 can be configured such that when the top cover 36 is in the closed position (36b), the charging connector 54 is in the storing position (54b) (Fig. 2). In such an embodiment, the charging connector 54 can be moved by moving the top cover 36. In particular, by moving the top cover 36 from the closed position to the open position, the charging connector 54 can be moved from the storing position to the operating position and vice versa.

In an embodiment, the charging connector 54 can be arranged in the operating position (54a) after the arrangement of the top cover 36 in the open position (36a). In the illustrated embodiment, the charging connector 54 can be mounted at the top cover 36 via the dispenser 50 (Fig. 2).

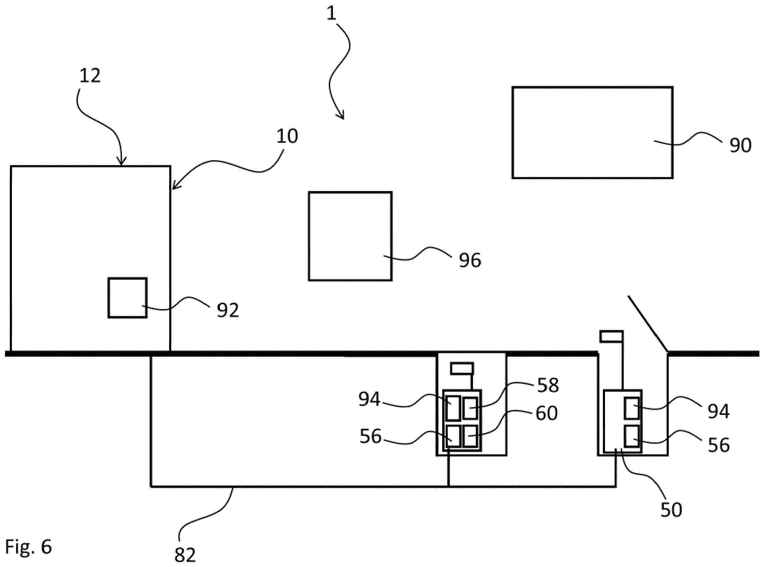

The charging system 1 can comprise a communication means 92. In an illustrated embodiment (Fig. 6), the supply unit 10 comprises the communication means 92.

The communication means 92 can be configured for communication with a network 90. The communication means 92 can be configured for communication with the underfloor distribution units 40. The communication means 92 can be configured for communication with a central control unit 56 of the underfloor distribution unit 40, particularly of the respective dispenser 50. The communication means 92 can be configured for communication with a DC surge protection unit 60 of the underfloor distribution unit 40, particularly of the respective dispenser 50. The communication means 92 can be configured for communication with an insulation monitoring unit 58 of the underfloor distribution unit 40, particularly of the respective dispenser 50. The communication means 92 can be configured for communication with a communication unit 94 of the underfloor distribution unit 40, particularly of the respective dispenser 50 (Fig. 6). The communication unit 94 of the underfloor distribution unit 40, particularly of the respective dispenser 50, can be configured for communication with the supply unit 10. The communication between the underfloor distribution unit 40 and the supply unit 10 can be provided by the communication of the communication unit 94 with the communication means 92.

The charging system 1 can further comprise a network interface 96. The network interface 96 can be configured for connecting the charging system 1 to the data network 90. The charging system 1 can be operatively connected to the network interface 96. The communication means 92 can be operatively connected to the network interface 96. In an embodiment, the communication means 92 can communicate with the data network 90 via the network interface 96.

In an embodiment, the connection between the supply unit 10 and the underfloor distribution units 40 can be provided via the connection matrix 20 (Figs 4, 5, 8). The connection matrix 20 can be comprised in the supply unit 10. The connection matrix 20 can be comprised in the supply unit 10 downstream of the AC-DC converter system 12. The connection matrix 20 can be comprised in the supply unit 10 downstream of the AC-DC converter 14 (particularly downstream of the plurality of AC-DC converters 14, 14a, 14b).

The connection matrix 20 can be arranged spatially distant to the underfloor distribution units 40. In an embodiment, the connection between the AC-DC converter system 12 and the underfloor distribution units 40, particularly the dispensers 50, can be provided via the connection matrix 20 (Figs 4, 5). In an embodiment, the connection between the AC-DC converter system 12 and the underfloor distribution units 40, particularly the charging connectors 54, can be provided via the connection matrix 20 (Figs 4, 5).

In an embodiment, the charging system 1 comprises a first AC-DC converter 14, 14a and a second AC-DC converter 14, 14b as well as a first underfloor distribution unit 40, 40a and a second underfloor distribution unit 40, 40b (Fig. 8). The connection matrix 20 can be connected to cables, particularly underground cables 82. The connection matrix 20 can comprise cables, particularly underground cables 82. The connection matrix 20 can comprise a switch 22, particularly a plurality of switches 22. The charging system 1 can be configured such that the switchable connection matrix 20 can be set such that the first AC-DC converter 14, 14a can provide DC to the first underfloor distribution unit 40, 40a. The charging system 1 can be configured such that the switchable connection matrix 20 can be set such that the first AC-DC converter 14, 14a can provide DC to the second underfloor distribution unit 40, 40b. The charging system 1 can be configured such that the switchable connection matrix 20 can be set such that the first AC-DC converter 14, 14a can provide DC to the first underfloor distribution unit 40, 40a and to the second underfloor distribution unit 40, 40b. The charging system 1 can be configured such that the switchable connection matrix 20 can be set such that the first AC-DC converter 14, 14a can provide DC to none of the first and second underfloor distribution units 40, 40a, 40b. The charging system 1 can be configured such that the switchable connection matrix 20 can be set such that the second AC-DC converter 14, 14b can provide DC to the first underfloor distribution unit 40, 40a. The charging system 1 can be configured such that the switchable connection matrix 20 can be set such that the second AC-DC converter 14, 14b can provide DC to the second underfloor distribution unit 40, 40b. The charging system 1 can be configured such that the switchable connection matrix 20 can be set such that the second AC-DC converter 14, 14b can provide DC to the first underfloor distribution unit 40, 40a and to the second underfloor distribution unit 40, 40b. The charging system 1 can be configured such that the switchable connection matrix 20 can be set such that the second AC-DC converter 14, 14b can provide DC to none of the first and second underfloor distribution units 40, 40a, 40b.

In an embodiment, via opening and/or closing the switch 22 (state of the switch 22) the provision of DC from the AC-DC converter 14, 14a, 14b to the respective underfloor distribution unit 40, 40a, 40b can be controlled. In an embodiment, via opening and/or closing the switch 22 (state of the switch 22) the provision of DC from the AC-DC converter 14, 14a, 14b to the respective underfloor distribution unit 40, 40a, 40b can be adjusted. In an embodiment, the charging system 1 comprises a controller configured for controlling the state of the switch 22. In an embodiment, the communication means 92 is configured for controlling the state of the switch 22. Each switch 22 of the plurality of switches can be individually addressable.

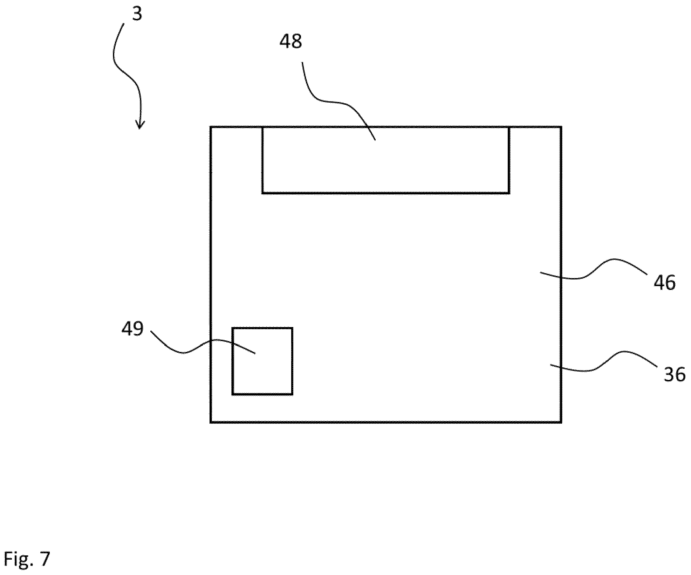

In Fig. 7, top view of a schematic illustration of a top cover 36 is shown. The top cover 36 can comprise the outer surface 46. In the closed position (36b) of the top cover 36, the outer surface 46 can face away from the interior space 32 of the underfloor cabinet 30 (see, e.g. Fig. 1). The top cover 36 can comprise an information unit 49. The information unit 49 can be arranged at the outer surface 46. The information unit 49 can be inserted in the top cover 36. The information unit 49 can be inserted in the top cover 36 such that the information unit 49 is visible from above the top cover 36. The information unit 49 can be inserted in the top cover 36 such that the information unit 49 flushes with the outer surface 46 of the top cover 36.

The top cover 36 can comprise a cable outlet 48 (Fig. 7). In an embodiment, the cable outlet 48 is formed partially by the top cover 36. The cable outlet 48 can comprise a hatch.

## Claims

1. A charging system (1) for an electric vehicle (100), wherein the charging system (1) comprises:
a supply unit (10) and one or a plurality of underfloor distribution units (40) electrically connected with the supply unit (10),
wherein the supply unit (10) comprises an AC-DC converter system (12) configured to convert alternating current, AC, from an electric grid to direct current, DC,
wherein each of the underfloor distribution units (40) comprises a DC charging equipment (42) and an underfloor cabinet (30),
wherein the underfloor cabinet (30) comprises a housing (34) surrounding an interior space (32),
wherein the DC charging equipment (42) is at least partially arranged beneath a driving surface (3) for the electric vehicle (100) in the interior space (32) of the underfloor cabinet (30),
wherein the DC charging equipment (42) is electrically connected to the supply unit (10) for receiving the direct current provided by the supply unit (10),
wherein the DC charging equipment (42) comprises a charging cable (52) with a charging connector (54) configured for connection with a charging inlet (102) of the electric vehicle (100) for charging the electric vehicle (100) with the direct current, wherein the charging connector is electrically connected to the supply unit (10) via the charging cable (52), and
wherein the housing (34) of the underfloor cabinet (30) comprises a top opening (38) and a top cover (36) configured to
cover, in a closed position of the top cover (36), the top opening (38), and to open, in an open position of the top cover (36), access to the interior space (32) of the underfloor cabinet (30) through the top opening (38) for retrieving the charging cable (52) from the interior space (32) of the underfloor cabinet (30).

2. The charging system (1) according to claim 1, wherein the top cover (36) comprises an outer surface (46) forming at least a portion of the driving surface (3) for the electric vehicle (100), when the top cover (36) is in the closed position, and/or
wherein the interior space (32) of the underfloor cabinet (30) is accessible from an exterior (9), particularly such that the charging connector (54) is retrievable from the underfloor cabinet (30) from the exterior (9), when the top cover (36) is in the open position,
particularly wherein the top cover (36) is repeatedly, reversibly movable from the closed position to the open position.

3. The charging system (1) according to one of the claims 1 to 2, wherein the top cover (36) comprises an inner surface (44), wherein the DC charging equipment (42) is mounted at the inner surface (44) of the top cover (36), particularly
wherein the DC charging equipment (42) is mounted such at the inner surface (44) of the top cover (36) that in the closed position of the top cover (36), the DC charging equipment (42) protrudes into an interior space (32) of the underfloor cabinet (30) and wherein in the open position of the top cover (32), the DC charging equipment (42) is moved at least partially out of the interior space (32) of the underfloor cabinet (30).

4. The charging system (1) according to one of the claims 1 to 3, wherein each of the underfloor distribution units (40) further comprise a dispenser (50), wherein the dispenser (50) is configured for receiving the direct current provided by the supply unit (10) and for providing the received direct current to the respective charging cable (52) with the charging connector (54).

5. The charging system (1) according to one of the claims 1 to 4, wherein the underfloor distribution units (40), particularly the dispensers (50), comprise at least one central control unit (56), an insulation monitoring unit (58) and/or a DC surge protection unit (60).

6. The charging system (1) according to one of the claims 1 to 5, wherein the underfloor distribution units (40), particularly the dispensers (50), comprise a communication unit (94) for communication with the supply unit (10).

7. The charging system (1) according to one of the claims 1 to 6, wherein the underfloor cabinet (30) comprises a cable outlet (48) configured to guide the charging cable (52), when the charging connector (54) is received from the underfloor cabinet (30).

8. The charging system (1) according to one of the claims 1 to 7, wherein the top cover (36) comprises an information unit (49) configured for indicating a charging status of the electrical vehicle (100) connected to the DC charging equipment (42) and/or for indicating a status of the underfloor distribution unit, particularly wherein the information unit (49) comprises an LED.

9. The charging system (1) according to one of the claims 1 to 8, wherein the underfloor distribution units (40), particularly the underfloor cabinets (30), are configured for ingress protection, particularly wherein the underfloor distribution units (40), particularly the underfloor cabinets (30), are configured for protection against moisture ingress and/or condensation, and / or
wherein the underfloor distribution units (40), particularly the underfloor cabinets (30), are resistant to loads with a weight of at least 40 t and/or
wherein the information unit (49) is resistant to loads with a weight of at least 40 t.

10. The charging system (1) according to one of the claims 1 to 9, wherein the supply unit (10) and the underfloor distribution units (40), particularly the dispensers (50), are configured such that each underfloor distribution unit (40) is individually addressable by the supply unit (10).

11. The charging system (1) according to one of the claims 1 to 10, wherein the supply unit (10) and the underfloor distribution units (40), particularly the dispensers (50), are configured such that power is distributable by the supply unit (10) simultaneously to at least two of the plurality of underfloor distribution units (40).

12. The charging system (1) according to one of the claims 1 to 11, wherein the supply unit (10) and the underfloor distribution units (40), particularly the dispensers (50), are configured such that power is dynamically distributable by the supply unit (10) to the underfloor distribution units (40), particularly to the dispensers (50).

13. The charging system (1) according to one of the claims 1 to 12, wherein the AC-DC converter system (12) comprises a plurality of AC-DC converters (14), wherein each DC charging equipment (42) is electrically connectable to at least one AC-DC converter (14).

14. The charging system (1) according to one of the claims 1 to 13, further comprising a network interface (96) for connecting the charging system (1) to a data network (90), wherein the charging system (1) is operatively connected to the network interface (96) for at least one of carrying out a command received from the data network (90) and sending status information of the charging system (1) to the data network (90).

15. Method of electrically charging an electric vehicle by the charging system according to one of the preceding claims, the method including
Providing the electric vehicle on the driving surface;
Retrieving, with the top cover being in the open position, the charging cable, particularly the charging cable with the charging connector, from the interior space of the underfloor cabinet;
Connecting the charging connector to the electric vehicle;
Providing direct current by the supply unit via the charging cable and the charging connector to the electric vehicle for charging the electric vehicle;
Disconnecting the charging connector from the electric vehicle;
Storing the charging cable to the interior space of the underfloor cabinet; and
Closing the top cover.
